Europäisches Patentamt

European Patent Office

Office européen des brevets

(11) Publication number: 0 401 899 A1

# EUROPEAN PATENT APPLICATION

(21) Application number: 90201375.4

(22) Date of filing: 30.05.90

(51) Int. Cl.5: G06F 15/60, B60K 35/00

(30) Priority: 07.06.89 NL 8901447

(43) Date of publication of application:
12.12.90 Bulletin 90/50

(84) Designated Contracting States:
AT BE CH DE ES FR GB IT LI NL SE

(71) Applicant: Volvo Car B.V.
Steenovenweg 1
NL-5708 HN Helmond(NL)

(72) Inventor: Beimers, Hendrik Wiebe
Verdilaan 11
NL-5707 RG Helmond(NL)

(74) Representative: Timmermans, Anthonius
C.Th., Ir. et al
European Patent Attorneys Octrooibureau
Zuid P.O. Box 2287
NL-5600 CG Eindhoven(NL)

(54) Method for displaying fields of vision of a mirror.

(57) A method is described to visualize the view via a mirroring surface, which is either flat or curved in one or two directions. Taking spherical coordinates $U$ and $V$ on a double curved mirroring surface, with extremes $U_{min}$, $U_{max}$, $V_{min}$ and $V_{max}$, a first estimate for the coordinates of a local reflection point $M_1$ is given by:

$$(U_1, V_1) = \tfrac{1}{2} (U_{max} - U_{min}, V_{max} - V_{min})$$

In a place sett-up by the local normal $N_1$ in $M_1$ and the unit vector in one coordinate direction, eye point $O$ and image point $P$ are projected in $O'$ and $P'$ respectively. Angles $O' M_1 N_1$ and $P' M_1 N_1$ are compared to form a better estimate for $M_1$ wherein these angles are more equal. The same is applied with respect to the other coordinate direction to optimize every local reflection point for any given image point.

FIG.4

## Method for displaying fields of vision of a mirror.

The invention relates to a method for displaying, on a display device, inter alia images obtained via reflection on a mirroring surface.

In designing, by means of a CAD computer system, a working environment in general and in particular the driver's seat in e.g. a vessel or a car, use is made of electronic image data, which can be visualized as desired on a display device. Said display data represent elements, such as eg. a part of the interior of the vehicle, the driver's seat, a model of the body of the driver himself, the steering wheel, the pedals the dashboard and the mirrors, such as inside and outside mirrors. In current CAD systems it is attempted to meet the various ergonomic requirements by a suitable selection of the dimensions and mutual distances of said elements. More advanced systems sometimes also have an option to get an impression of in particular the view a driver has, via the mirrors, of his surroundings. Said known systems are quite unsophisticated in this regard, and offer few possibilities for a further evaluation of said view.

The object of the invention is to provide a method which makes it possible to provide images of reflections on a mirroring surface whereby a highly accurate understanding is given of the view of in particular a driver of a vehicle or of the way the driver's view is obstructed by the presence of a desirable or undesirable mirroring surface.

In order to accomplish that objective the method according to the invention is characterized in that electronically composed image data are selected in a data processing unit, which image data are connected with the view a driver of a vehicle has, via a mirroring surface, of at least part of his surroundings, that the coordinates of said mirroring surface and of an eye point (O) are input into said data processing unit and that with respect to said eye point (O) a point mirroring is carried out of an image point (P) from the image data for composing the images obtained by reflection.

The advantage of the method according to the invention is that a high degree of accuracy and a reliable reproduction of images obtained after reflection can be accomplished by using a point mirroring. Various types of image data can be input into the data processing unit. Thus data with regard to the road surface can be completed as desired with e.g. a grid indication on the road surface whereby, when the image obtained after point mirroring of the grid indication is evaluated, an accurate understanding is provided of the driver's view and in particular of the distortion caused by the mirroring surface. The understanding thus gained can be used to determine for example the location, the size and the kind or mirror more closely and to ensure a required view. Furthermore an understanding is given with regard to a blind angle possibly present.

A further advantage is that the method according to the invention can also be used for displaying reflections of parts of the interior on mirroring surfaces (e.g. reflection of dashboard lighting or dashboard warning signals on the windscreen). This provides an understanding of the degree in which a driver or other occupants are bothered by said reflections.

One method according to the invention, which can be used in a simple manner on a flat mirroring surface, is characterized in that the coordinates of the point of reflection on the mirroring surface are determined by mirroring the eye point (O) with respect to the mirroring surface and intersecting a straight connecting line between the mirrored eye point (O) and the image point (P) with the mirroring surface.

This method allows a fast software implementation, also for obtaining the more complicated displays. A further method according to the invention, which is used with curved mirrors, is characterized in that within extreme values of spherical coordinates taken on the curved mirroring surface an estimate $M_1$ for the coordinates of the mirroring surface is taken, that a local normal $N_1$ is defined in the point $M_1$ and that a plane is defined which is sett up by said local normal and the tangent to the unit vector of one of said spherical coordinates, that in said plane the eye point (O) and the image point are projected in projection points $O_i$ and $P_i$, that for each estimate $M_i$ the difference is determined between the angles which straight connecting lines $O_i$ - $M_i$ and $P_i$ - $M_i$ each form with the local normal $N_1$ and that, as long as this difference is larger than a desirable difference, in a next iteration step the corresponding coordinate of the estimate for $M_i$ is selected for the extreme values of said one spherical coordinate, for determining a more accurate estimate for the coordinates of the place of reflection on the mirroring surface.

The advantage of said method according to the invention is that, the computing time can remain limited if desired, because an accuracy of the images obtained which is dependent on the difference given can be determined as desired.

The invention and its further advantages will be explained in more detail with reference to the following drawing, in which:

Figure 1 is a reduced version of a structural diagram, with reference to which the method according to the invention will be further explained;

Figure 2 is a technical drawing by means of which the method according to Figure 1 for displaying images obtained by reflection on a flat mirror are further explained;

Figure 3 is a technical drawing similar to Figure 2, in this case relating to images obtained by reflection on a mirror curved in one direction; and

Figure 4 is a technical drawing similar to Figure 3, relating to images obtained by reflection on a mirror curved in two directions.

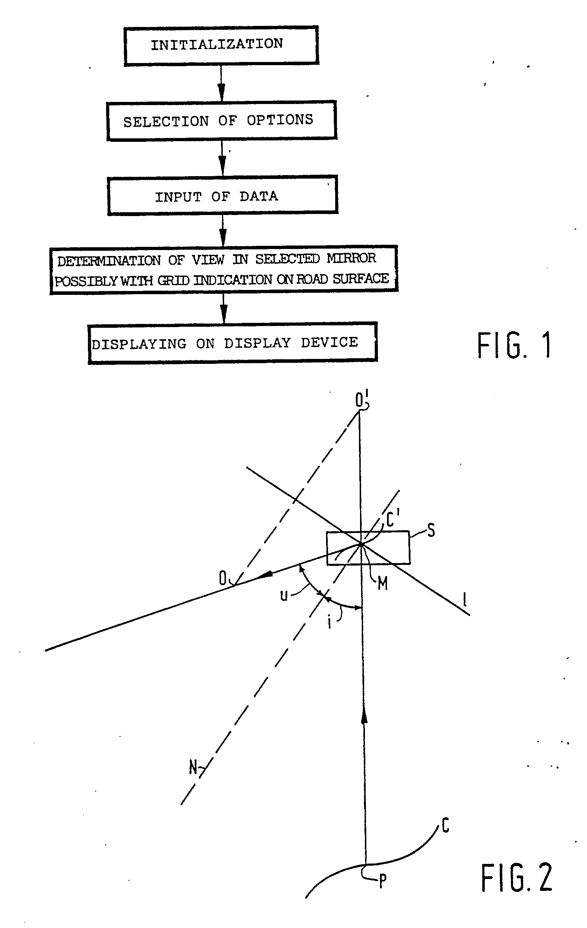

The method to be explained hereinafter can be used on a computer system suitable for that purpose. Such a computer system is generally known and inter alia comprises a central processing unit, to which means for inputting information, such as e.g. a keyboard, whether or not provided with a mouse and an indicator pen are coupled, and in which means for storing and outputting information, such as e.g. a display device, are incorporated. In Figure 1 the method for visualizing on a display device inter alia images obtained via reflection on a mirroring surface is further explained. In a first step initialization of the system takes place, the required software is called in and memory space is reserved. In a second step a number of possible options can be selected. In this step a menu with the options that are possible is generally displayed on the display device. For example the following options can be selected:

1. A reflection option or a mirror option. With the reflection option the reflection of the lights present in the vehicle on e.g. the windscreen of the vehicle is further examined. With the mirror option it is desired that the view the driver has in his mirror is visualized on the display device;

2. An inside mirror or an outside mirror;

3. A flat mirror or a spherical mirror; and

4. In case a spherical mirror has been selected there is furthermore a possibility to select either a convex mirror, whereby on all places ·on the mirror surface the normals extend through one point, namely the centre of the hemisphere, or a mirror having a shape which can be freely selected, such as e.g. an ellipsoid, a cylinder, a cone, a barrol shape, a balloon shape and the like. In general there will be a limitation with regard to the shape to be selected in the sense that it should not be alternately convex and concave; flat parts are generally allowed.

In the third step the input of data will be different, dependent on the options selected . Examples of data to be input are the following:

1. The kind of mirror is selected, viz. flat, convex or otherwise, after which the CAD-system in question calls in the mathematical description of the mirror surface from the memory of the system;

2 . In case an inside mirror has been selected use may e.g. be made of the possibility to indicate the contour of the field of vision of the part of the rear window with the indicator pen. Also the number of points to be processed on the circumference of the rear window is input then;

3. The direction of the normal to be selected is shown and it is queried whether the direction displayed is correct. If this is not the case the direction of the normal opposite the direction displayed at that moment is selected;

4. Data with regard to the course of the road surface are input;

5. The coordinates of the point from where observations are made, the so-called eye point (O), are input; and

6. The maximum allowable deviation between the angle of incidence, to be further explained, and the exit angle is input.

On the basis of the available data the view in the selected mirror is then computed. Said computation will be explained in more detail hereinafter. The results of the computation carried out are displayed on the display device, which is indicated in the fifth step in Figure 1. After the results have been displayed they can be interpreted in a. simple manner. If desired the road surface displayed can be provided with an indication in the shape of a grid or possibly in the shape of one or more lines. By interpreting the image reproduced in the mirror the possibility is created to establish the presence of a possible distortion caused by reflection of the image in the mirror in simple manner. Also a possible limitation of the angle of vision can be established in a simple manner, together with the presence of a possible blind angle in the mirror. Furthermore it is possible to check whether the view in the mirror satisfies the legal requirements and standards to be made thereof in the various countries.

In Figure 2 a further explanation is given of the manner in which the coordinates of the point of reflection M on the mirror surface, the boundary of which is indicated by S, is to be found with a given image point P and a given eye point O. In the very first place the eye point O is mirrored with respect to the mirroring surface S in which the line 1 is located. Said mirroring of the eye point O produces the point O′. Connecting O′ with P and intersecting said straight connecting line O′P with the mirroring surface S produces the point M as an image point of P on the surface S. In M a normal N has been established and in the Figure the angle of incidence is designated by i and the exit angle is designated by u. The direction of the arrow on the straight line PM indicates the direction of the light beam. The same applies to the arrow on the straight line OM. C designates the curve on which the various image points P may be located. The representation of the curve C is designated by C′ on the mirror surface S. The representation shows clearly that part of the curve C′ is located outside the scope of the mirroring surface S. Said part is not visible from the eye point O, therefore. If it is desired that this part becomes visible as well, a mirror with for example another scope should be selected. By replacing the curve C by a grid (not shown) a complete image is created of that which an observer can observe in the mirroring surface S at the location of O. The mirroring surface S illustrated in Figure 2 is flat, consequently the method explained is exact and the angle u will be equal to the angle i.

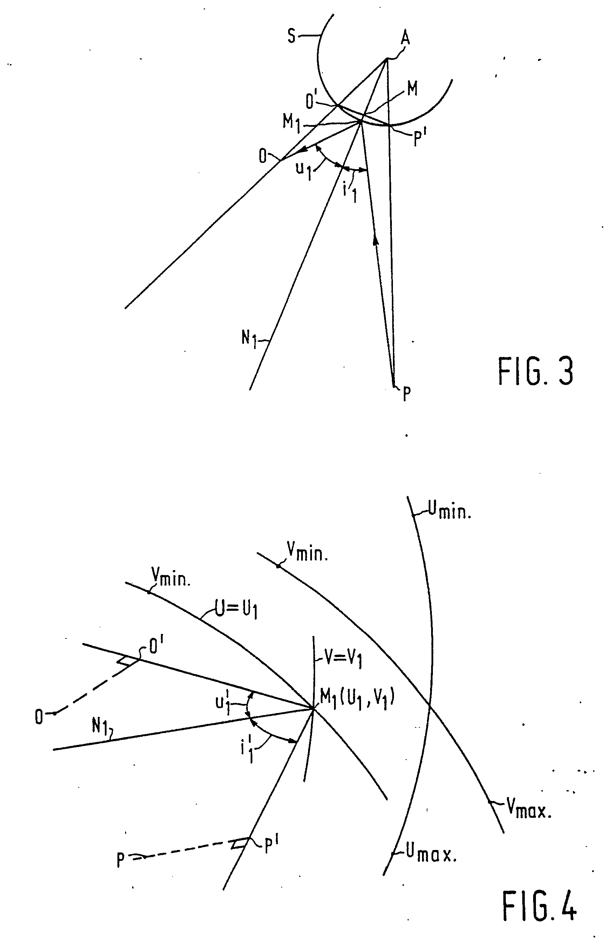

Figure 3 shows a similar situation, in which the mirroring surface S having a constant radius of curvature is curved in at least one direction in this case. For example a cylindrically curved surface or also a convex surface can be considered here. In said Figure only one curvature is illustrated, however. Given the eye point O and the image point P the problem is again finding a point at which the lightbeam touches the surface S of the mirror from P and reflects therein to O. The method of finding said reflection point is not exact at this stage, but is found by means of the following iteration process. Starting from the centre A of the curved surface S a straight connecting line is drawn from A to the image point P and from A to the eye point O, which results in points of intersection P and O′ with S. The straight connecting line between O′ and P′ is divided in two, as a result of which the point M becomes known. Extending AM produces a first estimate for the normal $N_1$ and a first estimate for the local reflection point of the beam from P′, viz. $M_1$. In accordance with their first estimate the angles of incidence and exit now estimated are designated by $i_1$ and $u_1$. In general the following three cases can be distinguished:

1. The first estimate of the angle of incidence $i_1$ and the exit angle $u_1$ are equal but for a difference which is smaller than a desirable difference. In that case the first estimate $M_1$ is a sufficiently accurate estimate for the local reflection point on the surface S;

2. The first estimate of the angle of incidence $i_1$ is larger than the first estimate of the exit angle $u_1$. In that case a better estimate for the local reflection point lies more in the direction of P′. A new next estimate for the reflection point on S is then found by dividing the straight connecting line P′$M_1$ in two and connecting the point thus found to A and extending said point until it intersects with S. The point of intersection then found is a next estimate (not shown) $M_2$ of the local reflection point of the beam from P, as it will be visible in O. Then the difference is determined anew, now between $u_2$ and $i_2$, and if said difference lies within the allowable difference $M_2$ is a sufficiently ac-

curate estimate for the local reflection point. If this is not the case said method will be carried out until a sufficiently accurate estimate $M_i$ for the local reflection point has been found;

3. If the exit angle $u_1$ is larger than the angle of incidence $i_1$ which happens in Figure 3, the better estimate for the local reflection point lies more in the direction of O′. Also in this case an iteration process indicated at 2 can be carried out in order to obtain a better estimate $M_2$. Also this method can be carried out for a composition (not shown) of image points.

Figure 4 shows the method that can be used with a mirror curved in two directions. Points on the mirror are characterized by means of spherical coordinates U and V. In Figure 4 a curve on which said spherical coordinate U is constant is provided with two points $V_{min}$ and $V_{max}$. The spherical coordinate on which V is constant is provided with the points $U_{min}$ and $U_{max}$. A first estimate for the local reflection point on the mirror surface is given by the point $M_1$, which has the coordinates $u_1$ and $v_1$, whereby it applies:

$$u_1 = \frac{U_{max} - U_{min}}{2} \quad \text{and}$$

$$v_1 = \frac{V_{max} - V_{min}}{2}$$

On the basis of tangents to the curves, to be locally indicated in $M_1$, in positive U-direction and V-direction respectively a first estimate for the local normal $N_1$ can be found by means of the product of said tangents to the curves in positive U-direction and V-direction respectively. The spherical coordinates U and V will form an independent, be it not necessarily orthogonal system. In the very first place a plane is constructed, which is bounded by the first estimate for the local normal $N_1$ and the tangent in positive V-direction at that location. On this plane the eye point O and the image point P are successively projected, which results in the respective projection points O′ and P′. The angles $u_1′$ and $i_1′$, which the respective straight connecting lines O′$M_1$ and P′$m_1$ form with $M_1$ can be considered to be estimates for the respective angles of exit and incidence in said plane. In the situation drawn in Figure 4 a better estimate for the local reflection point on the mirror surface can be found by taking a point which lies between $M_1$ and $V_{min}$, in order to make the angles $u_1′$ and $i_1′$, more equal to each other. It stands to reason that this is only an example and it may well be so that a better estimate for the local reflection point should be found in exactly the other direction. This is of course monitored by the software, in order to ensure that the iteration process converges. The course of the iteration process thus indicated is the same in said plane, as described with reference to Figure 3. If a sufficiently accurate estimate with regard to the V-coordinate of the local reflection point is known, a plane (not shown) is then constructed, which is bounded by the then most optimal normal $N_1$, and the curve V is $V_1$. With this the optimum with regard to the coordinate U can be found. When the U-coordinate and the V-coordinate are orthogonal, the individual iteration processes will not influence each other.

If this is not the case, there is a possibility that the individual U- and V-iteration processes do influence each other: it may occur that as a consequence of the limiting of the iteration area in the one coordinate direction it appears that the point looked for does not fall within the iteration area of the other coordinate. For this reason it is checked with every step, also on the boundaries of the iteration area, whether the point looked for has a higher coordinate value than the maximum of the iteration area or a lower coordinate value than the minimum of the iteration area. If this is the case the iteration area (its boundaries) are moved "upward" or "downwards", as the case may be. Eventually an estimate, sufficiently accurate with regard to the spherical coordinates, will be known for the local reflection point. This procedure may be repeated for image points P located on a curve not shown.

The methods explained hereinabove can be very well combined with the possibility of a vehicle carrying a load, by realising a rotation of the mirror, which rotation is dependent on the load of the vehicle. In this manner it even becomes possible to simulate the situation of a vehicle carrying a load and to evaluate the effect thereof on the view in the various types of mirrors, and to judge and check whether also in that situation the various legal requirements and standards are still satisfied.

**Claims**

1. Method for displaying, on a display device, inter alia images obtained via reflection on a mirroring surface, characterized in that electronically composed image data are selected in a data processing unit, which image data are connected with the view a driver of a vehicle has, via a mirroring surface, of at least part of his surroundings, that the coordinates of said mirroring surface and of an eye point (O) are input into said data processing unit and that with respect to said eye point (O) a point mirroring is carried out of an image point (P) from the image data for composing the images obtained by reflection.

2. Method according to claim 1, characterized in that said mirroring surface is flat.

3. Method according to claim 2, characterized in that the coordinates of the point of reflection on the mirroring surface are determined by mirroring the eye point (O) with respect to the mirroring surface and intersecting a straight connecting line between the mirrored eye point (O) and the image point (P) with the mirroring surface.

4. Method according to claim 1, characterized in that said mirroring surface is curved in at least one direction.

5. Method according to claim 4, characterized in that within extreme values of spherical coordinates taken on the curved mirroring surface an estimate $M_1$ for the coordinates of the mirroring surface is taken, that a local normal $N_1$ is defined in the point $M_1$ and that a plane is defined which is sett up by said local normal and the tangent to the unit vector of one of said spherical coordinates, that in said plane the eye point (O) and the image point are projected in projection points $O_i$ and $P_i$, that for each estimate $M_i$ the difference is determined between the angles which straight connecting lines $O_i$ - $M_i$ and $P_i$ - $M_i$ each form with the local normal $N_1$ and that, as long as this difference is greater than a desirable difference, in a next iteration step the corresponding coordinate of the estimate for $M_i$ is selected for the extreme values of said one spherical coordinate, for determining a more accurate estimate for the coordinates of the place of reflection on the mirroring surface.

6. Hethod according to claim 5, characterized in that when said mirroring surface is curved in two directions also the iteration steps are carried out, by adjusting the extreme values of the other spherical coordinate, for determining of an estimate for $M_i$ which is sufficiently accurate with regard to both spherical coordinates.

7. Method according to claim 5 or 6, characterized in that with given extreme values $W_{min}$ and $W_{max}$ of a spherical coordinate W the adjusted value of the new estimate is given by the relation:

$$\frac{W_{max} - W_{min}}{2}$$

with $W_{max}$ and $W_{min}$ both being positive.

8. Method according to any one of the preceding claims, characterized in that a rotation of the mirroring surface is carried out, whereby the degree of rotation is a measure for the weight of the load of a vehicle on which the mirroring surface is to be provided.

```
┌─────────────────────────┐
│      INITIALIZATION      │
└─────────────────────────┘
              │
              ▼
┌─────────────────────────┐
│   SELECTION OF OPTIONS   │
└─────────────────────────┘
              │
              ▼
┌─────────────────────────┐
│       INPUT OF DATA      │
└─────────────────────────┘
              │
              ▼
┌────────────────────────────────────────────┐
│ DETERMINATION OF VIEW IN SELECTED MIRROR     │
│ POSSIBLY WITH GRID INDICATION ON ROAD SURFACE│
└────────────────────────────────────────────┘
              │
              ▼
┌────────────────────────────────────────────┐
│      DISPLAYING ON DISPLAY DEVICE            │
└────────────────────────────────────────────┘
```

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | SYSTEMS INTERNATONAL, vol. 11, no. 3, 1983, pages 34-36, GB; T. BARKER et al.: "Practical ergonomics"<br>* Page 36, column 2, lines 5-32 * | 1-3 | G 06 F 15/60<br>B 60 K 35/00 |
| Y | IDEM | 4 | |
| Y | IEEE COMPUTER GRAPHICS & APPLICATIONS, vol. 6, no. 11, November 1986, pages 21-28, IEEE, New York, US; N. GREENE: "Environment mapping and other applications of world projections"<br>* Page 24, left-hand column, lines 5-32; page 24, right-hand column, lines 1-11; page 25, left-hand column, lines 1-14; page 25, right-hand column, lines 1-8; figures 3-5 * | 4 | |
| A | IDEM | 5 | |
| A | EP-A-0 299 769 (IBM)<br>* Figure 2; abstract; column 1, lines 22-47 * | 5 | TECHNICAL FIELDS SEARCHED (Int. Cl.5)<br><br>G 05 F<br>G 02 B<br>B 60 K |

The present search report has been drawn up for all claims

| Place of search | Date of completion of the search | Examiner |
|---|---|---|
| THE HAGUE | 13-09-1990 | VAN DOREMALEN,J.C.H. |